# EUROPEAN PATENT SPECIFICATION

(11) **EP 1 581 140 B1**
(45) Date of publication and mention of the grant of the patent: **10.08.2011**
(21) Application number: 03783013.0
(22) Date of filing: 19.12.2003
(51) Int. Cl.: A61C 8/00

(54) **Device comprising a fixture holder, a fixture and a dental screwing arrangement**
Vorrichtung enthaltend einen Verankerungshalter, eine Verankerung und eine dentale Schraubenanordnung
Dispositif comprenant un support de fixation, une fixation et un système de vissage dentaire

(30) Priority: 30.12.2002 SE 0203899
(43) Date of publication of application: 05.10.2005
(73) Proprietor: Nobel Biocare Services AG, 8058 Zürich-Flughafen (CH)
(72) Inventor: BRAJNOVIC, Izidor, S-416 77 Göteborg (SE); FROMELL, Roger, S-449 33 Nödinge (SE)
(74) Representative: Byström, Kurt Linus
(86) International application number: PCT/SE2003/001976
(87) International publication number: WO 2004/058094

(56) References cited:
- WO-A1-00/27300
- WO-A1-02/053055
- WO-A2-00/28914
- SE-C2- 508 662

## Description

The present invention relates to a device comprising a fixture holder, a fixture and a dental screwing arrangement which operates with at least two different screwing functions. The first screwing function is intended for holding together the fixture holder and the fixture, and the second crewing function is intended for screwing the fixture holder and the fixture, held together by the first screwing function, into a jaw bone.

The present invention can be used advantageously in conjunction with the installation principles proposed by Nobel Biocare AB and going under the name ARK (Absolute Rehabilitation Kit). Reference is made, inter alia, to PCT applications WO 02/053055 A1, WO 02/053056 A1 and WO 02/053057 A1 filed by the same Applicant and same inventor as for the present patent application. Said specifications relate to said principles. However, the invention has a more general use in dental installation arrangements in conjunction with tooth replacement structures for individual teeth, dental bridges for two or more teeth, etc., and templates and accessories therefor.

The present invention uses, inter alia, the terms Stargrip function and Unigrip function, in which connection reference is made to the fact that these terms are known in the dental field in connection with the ranges sold by Nobel Biocare AB. See, inter alia, patents obtained and patent applications filed by the same Applicant. Thus, for example, the Stargrip function is a "star screw function" combined with a securing function which operates with a wedging principle, by means of which the tool can be connected to a screw or component and brought with the securing function to the thread mouth in question. The Unigrip function permits the application of a general use of the tool in question.

Advances are constantly being made in the dental field in question here and it is therefore important in some situations to use configurations for screwing functions which can be exchanged for older configurations, for example square configurations, with more modem and effective configurations. The aim of the invention is to solve these problems, among others.

The components used and screwing functions are to be able to be effected with a varying and greater number of tools which are made available and have been made available on the market by Nobel Biocare AB. The invention aims to solve this problem too.

WO-A-00 28 914 describes a dental implant having a fixture and a fixture holder, in the present case an abutment. A screw has a so-called Unigrip function and is intended to held the fixture and the fixture holder together. The screw can be inserted through a recess of the fixture holder, where it is positioned when tightened, which recess carries a second internal screw function. This second screw function can be used to screw the fixture connected to the abutment holder into a jaw bone.

WO-A-00 27 300 describes a dental implant having on its top portion a screw function comprising an internal star screw function. The dental implant further comprises on its top portion an external hexagon function, which is used to fit a spacer element in a given orientation onto the implant.

The invention provides a device comprising a fixture holder, a fixture and a dental screwing arrangement, which operates with at least two different screwing functions that can be performed by means of three different types of screwing tools, wherein the first screwing function comprises a screw, whose screw head is situated inside the fixture holder and which screw is intended for holding together the fixture holder and the fixture and is operated with a so-called Unigrip function, wherein the second screwing function comprises a portion of the fixture holder and is intended for securing the fixture, when held together with fixture holder by the screw, in a jaw bone and is operated with an internal screwing function, and wherein the screw of the first screwing function can be applied in its position inside the fixture holder via the portion, in which the internal screwing function is formed, characterized in that the internal screwing function is a so-called Stargrip function and in that the fixture holder has an external hexagon which is part of the second screwing function.

Further developments of the concept of the invention are set out in the attached dependent claims.

By means of what has been proposed above, efficient installation possibilities are obtained in which older configurations can be rationalized and replaced with more modem configurations. The components are designed so that they can be used with existing tools and tools with different functions. Thus, the subject of the invention can satisfy the modern solutions used generally in Nobel Biocare AB's presently available articles. For example, screwdrivers with slots can be replaced by the Unigrip function. The fixture holder or equivalent component which previously had a square drive head can now be arranged for Stargrip function WP. In addition, a hexagonal outer shape is used which can serve to tighten or screw the fixture with a manual torque wrench when the machine concerned does not have the power to perform tightening. The outer hexagonal shape can also serve as contraindicator when the fixture holder is to be released from the installed fixture. If there is lack of space, a tool with a socalled open-end wrench function can also be used because the hexagonal part is arranged with undercuts.

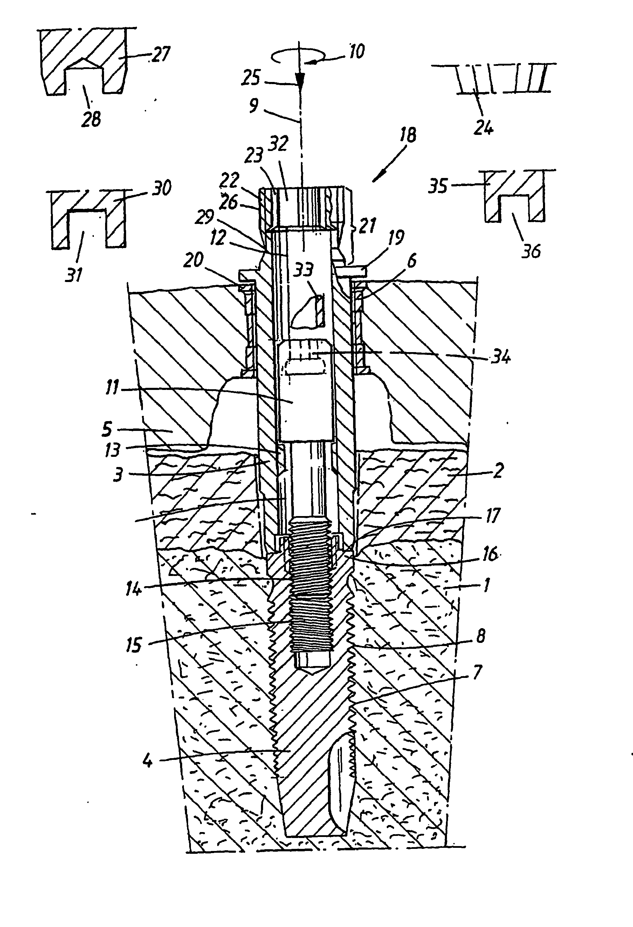

A presently proposed embodiment of a device having the characteristic features of the invention will be described below with reference to the attached drawing, in which: the figure shows a longitudinal section through first and second components in the form of a fixture and a fixture holder arranged in a jaw bone with the aid of installation equipment comprising a template with guide sleeve.

In the figure, reference number 1 designates a jaw bone, and reference number 2 designates gum or soft tissue. A first component in the form of a fixture holder is designated by 3, and a second component in the form of a fixture is designated by 4. In accordance with what is described below, the fixture and the fixture holder are held together as one unit which can be applied in the jaw bone via a template 5. The template comprises a sleeve 6 through which the assembled unit with the fixture 4 can be driven down to cooperate with the jaw bone, for example into a hole 7 formed in the latter, in which hole 7 the fixture 4 is to be screwed via a thread 8 arranged on the outside of the fixture. The assembled unit is screwed by rotating the unit about its longitudinal axis 9 in a direction of rotation 10.

The fixture and the fixture holder are held together with a first screwing function comprising a screw 11 arranged inside a space 12 inside the first component or the fixture holder. The screw has a screw head which can be applied against an inwardly directed flange 13 arranged in the fixture holder. The screw 11 extends with a threaded part 14 down into the inner thread 15 in the fixture. Said threaded part has an outer thread which can cooperate with the inner thread. The fixture has an upper surface 16 against which the end surface 17 of the fixture holder can be applied in said assembled position. The arrangement with first and second components in the form of a fixture holder and a fixture thus held together by a screw function is already known per se, and in this connection reference may be made inter alia to said PCT applications.

The assembled unit has a second screwing function indicated symbolically by 18. The height position of the assembled unit can be determined by means of a stop member, for example an outwardly protruding flange 19, on the outside of the fixture holder, which stop member cooperates with a corresponding stop member 20 on the sleeve 6. Thus, the underside of the flange 19 comes to lie against an upper surface of the flange 20. The first component or the fixture holder is provided with a part 21 which extends above the stop member 19 and which, in the illustrative embodiment, is situated outside or above the template 5. The part 21 can have an upper or outer portion 22 which on the inside has a Stargrip function 23. This Stargrip function can permit cooperation with a tool which is designed with a corresponding Stargrip function in a manner known per se. In the figure, such as tool is indicated symbolically by 24. The tool can be applied from above and driven toward the Stargrip function 23 in a direction 25 in a manner known per se. The portion 22 is provided on its outside 26 with a hexagonal shape of a type known per se. Such a tool is indicated symbolically in the figure by 27, and the tool's recess is indicated by 28. This tool too is known per se and the recess 28 will of course be of a size which alows it to be attached to the outer hexagon 26. Below the portion 22, a wrench grip 29 can also be provided in a manner known per se. The tool 27 can consist of or comprise a manual torque wrench. Alternatively, an open-end wrench function can be used, which has been represented by 30 in the figure. When using the tool 30, its recess 31 is engaged over the portion 22, which in a manner known per se is designed with undercuts.

The screw 11 can first be applied with its front end down into the recess 12 via the Stargrip function 23, i.e. via its recess 32, so that the screw with screw head and threaded part can be pushed down into the recess in the direction 25 to the position shown in the figure. A tool 33 can also be applied via the recess 32 in order to cooperate with the screw head 11 with Unigrip function 34. The unit 3, 4 in the assembled state, i.e. a state which has been produced with the first screwing function with the screw 11, is applied to the jaw bone where the fixture is screwed tight. The first screwing function has thus been activated before full insertion. The tool can also be applied to the screw head and Unigrip function 34 when the fixture holder is to be released from the installed fixture. This loosening function takes place in a direction of rotation counter to the direction of rotation 10. The hexagon shape 26 or wrench grip shape 29 can be used as supports in this case. The tool which can cooperate with the wrench grip 29 is indicated symbolically by 35 in the figure, and the actual recess part in the tool by 36. Since tool functions of a type known per se can be used to perform the different tightening functions can be used, they will not be described in detail here, and instead reference is made in purely general terms to the range offered for sale by Nobel Biocare AB. The anchoring principle for the fixture 4 with the aid of fixture holder 3 and template 5 is already known and will therefore not be described in detail here, and instead reference may be made inter alia to the patent applications mentioned above.

## Claims

1. A device comprising a fixture holder (3), a fixture (4) and a dental screwing arrangement, which operates with at least two different screwing functions,
wherein the first screwing function comprises a screw (11), whose screw head is situated inside the fixture holder (3) and which screw (11) is intended for holding together the fixture holder (3) and the fixture (4) and is operated with a so-called Unigrip function,
wherein the second screwing function comprises a portion (22) of the fixture holder (3) and is intended for securing the fixture (4), when held together with fixture holder (3) by the screw (11), in a jaw bone (1) and is operated with an internal screwing function (23),
and wherein the screw (11) of the first screwing function can be applied in its position inside the fixture holder (3) via the portion (22), in which the internal screwing function (23) is formed,
**characterised in that** the internal screwing function (23) is a so-called Stargrip function and **in that** fixture holder (3) has an external hexagon (26) which is part of the second screwing function.

2. The device as claimed in claim 1, wherein that the external hexagon (26) is arranged as contraindication on loosening the fixture (3) from the fixture (4) when the latter is in its installed state.

3. The device of any preceding claim, wherein the at least two different screwing functions are performed by means of three different types of screwing tools.

4. An apparatus comprising the device as claimed in any preceding claim and an installation arrangement having a template (5) provided with a guide member (6) via which the fixture (4) and the fixture holder (3) in the assembled state, obtained by means of the screw (11) which provides the first screwing function, can be secured in a jaw bone (1).

5. The device as claimed in patent claim 4, wherein the portion (22), in which the Stargrip function is formed, is arranged on a part (21) located outside the guide member (6) of the template (5).

6. The device as claimed in patent claim 5, wherein the part (21) located outside the guide member (6) has, on its outside, the external hexagon function (26) by means of which the fixture holder (3) can be activated with a tool (24 or 27) using the hexagon function.

7. The device as claimed in patent claim 5 or 6, wherein the portion (22), in which the Stargrip function is formed, is arranged on inner parts (32) of the part (21) located outside the guide member (6), and the hexagon function is arranged on the outside of the part (21) located outside the guide member (6).

## Patentansprüche

1. Vorrichtung, die einen Befestigungshalter (3), eine Befestigung (4) und eine Dentalschraubanordnung umfasst, die mit mindestens zwei unterschiedlichen Schraubfunktionen arbeitet,
wobei die erste Schraubfunktion eine Schraube (11) umfasst, deren Schraubenkopf im Inneren des Befestigungshalters (3) gelegen ist, und wobei die Schraube (11) zum Zusammenhalten des Befestigungshalters (3) und der Befestigung (4) vorgesehen ist und mit einer sogenannten Unigrip-Funktion betätigt wird,
wobei die zweite Schraubfunktion einen Teil (22) des Befestigungshalters (3) umfasst und zum Sichern der Befestigung (4), wenn sie durch die Schraube (11) mit dem Befestigungshalter (3) zusammengehalten wird, in einem Kieferknochen (1) vorgesehen ist und mit einer inneren Schraubfunktion (23) betätigt wird,
und wobei die Schraube (11) der ersten Schraubfunktion mittels des Teils (22), in dem die innere Schraubfunktion (23) ausgebildet ist, in ihre Position im Inneren des Befestigungshalters (3) gebracht werden kann,
**dadurch gekennzeichnet, dass** die innere Schraubfunktion (23) eine sogenannte Stargrip-Funktion ist und dass der Befestigungshalter (3) einen äußeren Sechskant (26) aufweist, der ein Teil der zweiten Schraubfunktion ist.

2. Vorrichtung gemäß Anspruch 1, wobei der äußere Sechskant (26) als Kontraindikation beim Lösen des Befestigungshalters (3) von der Befestigung (4), wenn letztere in ihrem eingebauten Zustand ist, eingerichtet ist.

3. Vorrichtung gemäß einem vorhergehenden Anspruch, wobei die mindestens zwei unterschiedlichen Schraubfunktionen mittels dreier unterschiedlicher Arten von Schraubwerkzeugen durchgeführt werden.

4. Gerät, das die Vorrichtung gemäß einem vorhergehenden Anspruch und eine Installationsanordnung umfasst, die eine Schablone (5) aufweist, die mit einem Führungselement (6) versehen ist, mittels dessen die Befestigung (4) und der Befestigungshalter (3) in dem zusammengesetzten Zustand, der mittels der Schraube (11), welche die erste Schraubfunktion vorsieht, erhalten wird, in einem Kieferknochen (1) gesichert werden können.

5. Vorrichtung gemäß Patentanspruch 4, worin der Teil (22), in dem die Stargrip-Funktion ausgebildet ist, auf einem Teil (21) angeordnet ist, der außerhalb des Führungselements (6) der Schablone (5) angeordnet ist.

6. Vorrichtung gemäß Patentanspruch 5, wobei der Teil (21), der außerhalb des Führungselements (6) angeordnet ist, auf seiner
Außenseite die äußere Sechskantfunktion (26) aufweist, mittels derer der Befestigungshalter (3) mit einem Werkzeug (24 oder 27) unter Verwendung der Sechskantfunktion aktiviert werden kann.

7. Vorrichtung gemäß Patentanspruch 5 oder 6, worin der Teil (22), in dem die Stargrip-Funktion gebildet ist, auf inneren Teilen (32) des Teils (21), der außerhalb des Führungselements (6) angeordnet ist, eingerichtet ist und die Sechskantfunktion auf der Außenseite des Teils (21), der außerhalb des Führungselements (6) angeordnet ist, eingerichtet ist.

## Revendications

1. Dispositif comprenant un porte implant (3), un implant (4) et un agencement de vissage dentaire, qui fonctionne avec au moins deux fonctions de vissage différentes,
dans lequel la première fonction de vissage comprend une vis (11), dont la tête de vis est située à l'intérieur du porte implant (3) et laquelle vis (11) est destinée à maintenir ensemble le porte implant (3) et l'implant (4) et est manoeuvrée grâce à une fonction dite fonction Unigrip,
dans lequel la deuxième fonction de vissage comprend une partie (22) du porte implant (3) et est destinée à fixer l'implant (4), Lorsqu'il est maintenu conjointement avec le porte implant (3) par la vis (11), dans un os de mâchoire (1) et que l'on manoeuvre grâce à une fonction de vissage interne (23),
et dans lequel la vis (11) de la première fonction de vissage peut être appliquée dans sa position à l'intérieur du porte implant (3) à travers la partie (22), où la fonction de vissage interne (23) est formée,
**caractérisé en ce que** la fonction de vissage interne (23) est une fonction dite fonction Stargrip et **en ce que** ce porte implant (3) a un élément hexagonal externe (26) qui fait partie de la deuxième fonction de vissage.

2. Dispositif tel que revendiqué dans la revendication 1, dans lequel l'élément hexagonal externe (26) est agencé comme une contre-indication au desserrage du porte implant (3) par rapport à l'implant (4) lorsque ce dernier est dans son état installé.

3. Dispositif selon l'une quelconque des revendications précédentes, dans lequel les au moins deux fonctions de vissage différentes sont réalisées au moyen de trois types différents d'outils de vissage.

4. Appareil comprenant le dispositif tel que revendiqué dans l'une quelconque des revendications précédentes et un agencement d'installation ayant un gabarit (5) doté d'un élément de guidage (6) à travers lequel l'implant (4) et le porte implant (3) dans l'état assemblé, obtenu au moyen de la vis (11) qui procure la première fonction de vissage, peuvent être fixés dans un os de mâchoire (1).

5. Dispositif tel que revendiqué dans la revendication de brevet 4, dans lequel la partie (22), où la fonction Stargrip est formée, est agencée sur une partie (21) située à l'extérieur de l'élément de guidage (6) du gabarit (5).

6. Dispositif tel que revendiqué dans la revendication de brevet 5, dans lequel la partie (21) située à l'extérieur de l'élément de guidage (6) présente, sur sa partie extérieure, la fonction (26) d'élément hexagonal externe au moyen de laquelle le porte implant (3) peut être active par un outil (24 ou 27) en utilisant la fonction d'élément hexagonal.

7. Dispositif tel que revendiqué dans la revendication de brevet 5 ou 6, dans lequel la partie (22), où la fonction Stargrip est formée, est agencée sur des parties intérieures (32) de la partie (21) située à l'extérieur de l'élément de guidage (6), et la fonction d'élément hexagonal est agencée à l'extérieur de la partie (21) située à l'extérieur de l'élément de guidage (6).
